# EUROPÄISCHE PATENTSCHRIFT

(11) **EP 3 825 265 B1**
(45) Veröffentlichungstag und Bekanntmachung des Hinweises auf die Patenterteilung: **22.05.2024**
(21) Anmeldenummer: 20209312.6
(22) Anmeldetag: 23.11.2020
(51) Int. Cl.: B65G 47/86

(54) **KLAMMERVORRICHTUNG ZUM HALTEN EINES BEHÄLTERS**
CLAMPING DEVICE FOR HOLDING A CONTAINER
DISPOSITIF DE SERRAGE PERMETTANT DE MAINTENIR UN RÉCIPIENT

(30) Priorität: 22.11.2019 DE 102019131587
(43) Veröffentlichungstag der Anmeldung: 26.05.2021
(73) Patentinhaber: Krones AG, 93073 Neutraubling (DE)
(72) Erfinder: LANDLER, Bruno, 93073 Neutraubling (DE)
(74) Vertreter: Nordmeyer, Philipp Werner

(56) Entgegenhaltungen:
- EP-A1- 2 159 172
- WO-A1-03/078285
- WO-A1-2018/130266
- US-A- 5 893 700
- US-A1- 2011 114 454
- US-A1- 2014 175 819

## Beschreibung

### Technisches Gebiet

Die vorliegende Erfindung betrifft eine Behälterbehandlungsvorrichtung mit einer Klammervorrichtung zum Halten eines Behälters in der Behälterbehandlungsvorrichtung, beispielsweise zum Halten eines Getränkebehälters an einem Halsabschnitt.

### Stand der Technik

Es ist bekannt, in Getränkeabfüllanlagen die jeweils zu befüllenden Behälter beziehungsweise bereits befüllte Behälter mittels Klammervorrichtungen durch die einzelnen Behandlungsstationen der Behälterbehandlungsvorrichtung zu transportieren. Dabei sind unterschiedliche Klammervorrichtungen bekannt, welche die jeweiligen zu behandelnden Behälter auf unterschiedliche Art und Weise halten.

So sind beispielsweise passive Klammervorrichtungen bekannt, welche lediglich durch das Einschieben des jeweiligen Behälters in die Klammervorrichtung elastisch vorgespannt werden und dann den Behälter halten. Aus der DE 10 2015 218 204 A1 ist eine solche Klammer zum Greifen von Behältern bekannt. Die Klammer weist dabei eine feste Position auf. Zum Greifen eines Behälters muss dieser in die Klammer gedrückt werden. Dabei werden die steifen Greifarme nach außen gespreizt, so dass der Behälter gegen die aufgrund des Spreizens der Klammer entstehende Schließkraft der Greifarme bewegt werden muss. Hierdurch wird der Behälter beim Einschieben mit einer hohen Kraft beaufschlagt, so dass solche Haltevorrichtungen zum Greifen beziehungsweise Halten fragiler und/oder leicht verformbarer sowie dünnwandiger Behälter nicht geeignet sind. Zumindest ist eine Neigung zum Verkratzen der Oberflächen der jeweiligen Behälter gegeben, so dass die Qualität der Behälter herabgesetzt ist.

Weiterhin bekannt sind aktive Klammervorrichtungen, bei welchen ein Öffnen und Schließen der jeweiligen Halteabschnitte der Klammervorrichtung mittels eines Aktuators aktiv durchgeführt wird. Solche aktiven Klammervorrichtungen dienen insbesondere dazu, eine sichere und schonende Übernahme der jeweiligen Behälter von einer vorhergehenden Klammervorrichtung zu ermöglichen oder eine ebenso sichere und behälterschonende Übergabe der Behälter an eine nachfolgende Klammervorrichtung zu gewährleisten. Insbesondere kann durch das aktive Öffnen und Schließen der jeweiligen Klammervorrichtung eine erhöhte Reibung an dem jeweiligen Behälter, welche beispielsweise zu einem Verkratzen des Behälters führen könnte, vermieden werden und andererseits kann eine vorgegebene Haltekraft beziehungsweise Klemmkraft eingestellt werden, welche innerhalb eines vorgegebenen Toleranzbereichs der Behälterdimension eingehalten werden kann. Solche aktiven Klammervorrichtungen setzen sich aus einer Vielzahl von Einzelteilen, beispielsweise Klammerarmen, Buchsen, Federelementen, Vorspannelementen und entsprechenden Verbindungselementen zum sicheren Verbinden der vorgenannten Teile, zusammen. Derart aufgebaute Klammervorrichtungen sind mithin aufwendig zu reinigen und weisen einen entsprechend hohen Fertigungsaufwand auf.

Bekannte Klammervorrichtungen werden je nach Einsatzgebiet auf oder von unterhalb an einen Sternklammerträger mit einer Mehrzahl von Schrauben, zumeist vier bis fünf Schrauben, montiert.

In der Regel werden zwei Schrauben mit Bolzenabschnitt zum Befestigen der Klammerarme der Klammervorrichtung am Träger und zumindest zwei weitere Schrauben zum Befestigen einer Trägerplatte der Klammervorrichtung am Klammerträger verwendet. Sowohl eine Erstmontage als auch ein Klammeraustausch bei der Überholung beziehungsweise im Falle einer Störung erfordert einen hohen Zeitaufwand für das Lösen dieser mehreren Schrauben pro Klammervorrichtung. Zudem liegt nach dem Lösen der Schrauben eine Mehrzahl von losen Einzelteilen vor, welche sowohl die Erstmontage als auch eine Wartung oder einen Austausch erschwert.

Die US 2011/0114454 A1 beschreibt eine Vorrichtung zum Transportieren von Behältern gemäß dem Oberbegriff des Anspruchs 1.

### Darstellung der Erfindung

Ausgehend von dem bekannten Stand der Technik ist es eine Aufgabe der vorliegenden Erfindung, eine verbesserte Klammervorrichtung zum Halten eines Behälters in einer Behälterbehandlungsvorrichtung, bevorzugt zum Halten eines Getränkebehälters an einem Halsabschnitt, bereitzustellen.

Die Aufgabe wird durch eine Behälterbehandlungsvorrichtung mit einer Klammervorrichtung zum Halten eines Behälters in der Behälterbehandlungsvorrichtung, bevorzugt zum Halten eines Getränkebehälters an einem Halsabschnitt, mit den Merkmalen des Anspruchs 1 gelöst.

Vorteilhafte Weiterbildungen ergeben sich aus den Unteransprüchen, der Beschreibung und den Figuren.

Entsprechend wird eine Klammervorrichtung zum Halten eines Behälters in einer Behälterbehandlungsvorrichtung, bevorzugt zum Halten eines Getränkebehälters an einem Halsabschnitt, vorgeschlagen, umfassend einen um eine erste Schwenkachse an einer Trägerplatte schwenkbar angeordneten ersten Klammerarm mit einem Halteabschnitt zur Anlage an den zu haltenden Behälter und einen um eine zweite Schwenkachse an der Trägerplatte schwenkbar angeordneten zweiten Klammerarm mit einem Halteabschnitt zur Anlage an den zu haltenden Behälter. Erfindungsgemäß weisen die erste Schwenkachse und die zweite Schwenkachse jeweils einen Zylinderstiftabschnitt zum Ausbilden eines Formschlusses radial zur Längsrichtung der Schwenkachse mit einer Bohrung in einem Träger der Behälterbehandlungsvorrichtung auf.

Dadurch, dass die erste Schwenkachse und die zweite Schwenkachse jeweils einen Zylinderstiftabschnitt zum Ausbilden eines Formschlusses radial zur Längsrichtung der Schwenkachse mit einer Bohrung in einem Träger einer Behälterbehandlungsvorrichtung aufweisen, können die Schwenkachsen mit ihren Zylinderstiftabschnitten direkt in die entsprechend ausgebildeten Bohrungen des Trägers der Behälterbehandlungsvorrichtung eingeführt werden, ohne dass ein Verschrauben der Schwenkachsen notwendig ist. Mit anderen Worten kann die Montage der Schwenkachsen erfolgen, ohne dass diese ein Gewinde aufweisen müssen, mit welchem sie in ein entsprechend ausgebildetes Gewinde im Träger in Eingriff zu bringen sind. Vielmehr können die Schwenkachsen in einfacher Weise in die Bohrungen entlang ihrer Längsachse eingeführt werden.

Bei der Erstmontage oder einer Wartung der Behälterbehandlungsvorrichtung ist entsprechend kein Verschrauben der Schwenkachsen mit dem Träger beziehungsweise kein Lösen der Schraubverbindung zwischen Schwenkachse und Träger erforderlich, sondern die Schwenkachsen können einfach in den Träger der Behälterbehandlungsvorrichtung eingesteckt werden. Folglich ist der Aufwand für Montage und Wartung gegenüber herkömmlichen Klammervorrichtungen reduziert.

Ferner ist durch das Einstecken der Zylinderstiftabschnitte der Schwenkachsen eine besonders genaue Positionierung der Klammervorrichtung und insbesondere der Klammerarme ermöglicht, da die Schwenkachsen direkt zur Positionierung sowohl der Klammervorrichtung gegenüber dem Träger als auch der Klammerarme gegenüber der Trägerplatte sowie gegenüber dem Träger genutzt werden.

Es hat sich als vorteilhaft herausgestellt, wenn die Zylinderstiftabschnitte der Schwenkachsen und die Bohrungen des Trägers eine Presspassung ausbilden, so dass die Schwenkachsen aufgrund der Presspassung nach einem Einführen am Träger gehalten werden. Vorzugsweise ist hierbei die Presspassung eine leichte Übermaßpassung, welche derart ausgebildet ist, dass ein Einführen der Schwenkachsen in die Bohrung ohne zusätzliches Werkzeug möglich ist, beispielsweise durch eine Paarung H7/m6, H7/n6, H7/p6 oder eine ähnliche Passung.

Gemäß einer weiteren bevorzugten Ausführungsform sind die Zylinderstiftabschnitte jeweils auf einer der Trägerplatte gegenüberliegenden Seite der jeweiligen Schwenkachse angeordnet. Dadurch werden bei einem Zusammenbau der Klammervorrichtung mit dem Träger der Behälterbehandlungsvorrichtung beziehungsweise einem Anbringen der Klammervorrichtung an dem Träger die Klammerarme zwischen der Trägerplatte der Klammervorrichtung und dem Träger platziert.

Alternativ können sich die Zylinderstiftabschnitte auch bezogen auf die Trägerplatte auf einer den Klammerarmen gegenüberliegenden Seite angeordnet sein. Die Schwenkachsen erstrecken sich mithin durch die Trägerplatte hindurch und weisen jenseits der Trägerplatte die Zylinderstiftabschnitte auf. Auf der anderen Seite der Trägerplatte sind entsprechend die Klammerarme angeordnet. Dadurch kann die Klammervorrichtung mittels Einschieben der Zylinderstiftabschnitte in die Bohrungen des Trägers in einfacher Weise auf den Träger gesteckt werden.

Gemäß einer weiteren bevorzugten Ausführungsform weisen die Schwenkachsen einen Passungsabschnitt zum Ausbilden eines Formschlusses radial zur Längsrichtung der Schwenkachse mit einer Passbohrung in der Trägerplatte auf, wobei bevorzugt der Passungsabschnitt und die Passbohrung eine Presspassung ausbilden, bevorzugt durch eine Paarung H7/m6, H7/n6, H7/p6 oder eine ähnliche Passung. Hierdurch ist es möglich, die Schwenkachsen und mithin die Klammerarme in Bezug auf die Trägerplatte auszurichten. Insbesondere, wenn zwischen den Passungsabschnitten und den Passbohrungen eine Übermaßpassung beziehungsweise Presspassung vorliegt, können die Schwenkachsen durch einfaches Einstecken der Passungsabschnitte in die Passbohrungen zugleich an der Trägerplatte befestigt werden, ohne dass ein Einschrauben der Schwenkachsen in die Trägerplatte erforderlich ist.

Vorzugsweise weisen die Schwenkachsen jeweils einen Mittelabschnitt auf, wobei der Mittelabschnitt der Schwenkachsen, um welche der jeweilige Klammerarm mittels einer Nabenbohrung schwenkbar ist, einen größeren Durchmesser aufweist als der Zylinderstiftabschnitt und der Passungsabschnitt der jeweiligen Schwenkachse, wobei bevorzugt die Schwenkachsen jeweils auf einer Seite des Mittelabschnitts einen Längsabsatz zum Anschlagen an den Träger und auf der anderen Seite des Mittelabschnitts einen weiteren Längsabsatz zum Anschlagen an die Trägerplatte aufweisen. Dadurch können die Schwenkachsen zur Positionierung der Trägerplatte relativ zum Träger genutzt werden. Zudem können Trägerplatte und Träger über die Längsabsätze gegeneinander verpresst werden, beispielsweise durch ein Anziehen einer Befestigungsschraube, so dass eine sichere Fixierung der Klammervorrichtung am Träger erzielt werden kann.

Gemäß der Erfindung ist zumindest ein Stützbolzen beabstandet von den Schwenkachsen an der Trägerplatte angeordnet ist, wobei der Stützbolzen einen Stirnseitenabschnitt zum Abstützen in Längsrichtung der Schwenkachsen gegen den Träger der Behälterbehandlungsvorrichtung und einen Anschlag zum Abstützen in Längsrichtung der Schwenkachsen gegen die Trägerplatte aufweist. Dadurch kann verhindert werden, dass durch ein Befestigen der Trägerplatte am Träger, beispielsweise mittels einer Befestigungsschraube, ein Verkippen der Trägerplatte relativ zum Träger entsteht, was ansonsten beispielsweise ein Klemmen der Klammerarme hervorrufen könnte, so dass die Klammervorrichtung nicht mehr ordnungsgemäß funktionieren könnte.

Gemäß der Erfindung ist eine Befestigungsschraube zum Befestigen der Klammervorrichtung an dem Träger der Behälterbehandlungsvorrichtung vorgesehen, wobei die Befestigungsschraube bevorzugt auf einer Seite einen Kopfabschnitt aufweist, mittels welchem die Befestigungsschraube sich an einer den Klammerarmen gegenüberliegenden Seite der Trägerplatte abstützt, und auf ihrer anderen Seite einen Gewindeabschnitt zum Eingreifen in eine Gewindebohrung des Trägers aufweist. Durch das Vorsehen der Befestigungsschraube kann eine sichere Fixierung der Klammervorrichtung am Träger bereitgestellt werden.

Es hat sich als vorteilhaft herausgestellt, wenn die Befestigungsschraube derart ausgebildet ist, dass eine vorgegebene Anzahl von Umdrehungen notwendig ist, um die Klammervorrichtung an dem Träger zu befestigen, bevorzugt zwei bis zehn Umdrehungen, besonders bevorzugt drei bis acht Umdrehungen und ganz besonders bevorzugt fünf Umdrehungen.

Ein besonders geringer Aufwand bei einer Montage oder Demontage der Klammervorrichtung kann erzielt werden, wenn genau eine Befestigungsschraube vorgesehen ist. Diese Befestigungsschraube dient quasi als Schnellverschluss für die Montage der Klammervorrichtung.

Gemäß der Erfindung ist die zumindest eine Befestigungsschraube zwischen den Schwenkachsen und dem zumindest einen Stützbolzen angeordnet. Dadurch wird eine durch die Befestigungsschraube auf die Klammervorrichtung übertragene Klemmkraft beidseitig der Befestigungsschraube übertragen, sodass ein Verkippen der Trägerplatte relativ zum Träger und/oder kein Klemmen der Klammerarme zwischen Trägerplatte und Träger entstehen kann.

Gemäß einer weiteren bevorzugten Ausführungsform weisen die Klammerarme jeweils einen Steuerabschnitt zur Interaktion mit einem Steuernocken zum aktiven Bewegen des jeweiligen Halteabschnitts auf. Mit anderen Worten ist die Klammervorrichtung in Form einer aktiven Klammervorrichtung ausgebildet.

Alternativ kann die Klammervorrichtung auch als passive Klammervorrichtung ausgebildet sein.

Gemäß einer weiteren bevorzugten Ausführungsform weist der Steuernocken einen Wellenabschnitt auf, mittels welchem er in axialer Richtung bezogen auf die Längsrichtung der Schwenkachsen in einer Nockenbohrung der Trägerplatte geführt ist. Zudem weist der Steuernocken eine Radialnut auf, wobei ein an der Trägerplatte angeordnetes Sicherungselement ausgebildet ist, um zum Arretieren des Steuernockens in axialer Richtung gegenüber der Trägerplatte in die Radialnut formschlüssig einzugreifen. Hierdurch ist eine besonders einfache Montage und Demontage des Steuernockens an beziehungsweise von der Trägerplatte ermöglicht. Der Steuernocken ist für eine Montage lediglich mit seinem Wellenabschnitt in die Nockenbohrung einzuführen und das Sicherungselement in die Radialnut zu schieben. Entsprechend ist bei einer Demontage lediglich das Sicherungselement aus der Radialnut zu entfernen. Anschließend kann der Steuernocken in einfacher Weise aus der Nockenbohrung gezogen werden.

Vorzugsweise ist das Sicherungselement mittels einer Schraube an der Trägerplatte befestigt, derart, so dass durch ein Lockern der Schraubverbindung ein Verschieben des Sicherungselements quer zur axialen Richtung ermöglicht ist, wobei bevorzugt die Trägerplatte einen Absatz aufweist, durch welchen das Sicherungselement in einer Sicherungsstellung, in welcher das Sicherungselement mit der Radialnut in Eingriff ist, radial zur axialen Richtung positioniert ist, wobei bevorzugt eine vorgegebene Anzahl von Umdrehungen notwendig ist, um das Sicherungselement aus der Sicherungsstellung bewegen zu können, bevorzugt eine halbe Umdrehung bis drei Umdrehungen, besonders bevorzugt eine Umdrehung. Dadurch kann auf ein Demontieren des Sicherungselements von der Trägerplatte verzichtet werden. Mithin sind bei einem Austausch des im Betrieb verschleißbehafteten Steuernockens die Schraube lediglich zu lockern und das Sicherungselement aus der Sicherungsstellung zu verbringen. Dabei entstehen keine losen Teile. Zudem ist der Aufwand hierfür vergleichsweise gering, sodass der Austausch in vergleichsweise kurzer Zeit vonstattengehen kann.

Ein besonders einfaches Montieren und Demontieren des Steuernockens, sowie ein besonders einfacher Aufbau der Klammervorrichtung kann erzielt werden, wenn das Sicherungselement mittels der Befestigungsschraube an der Trägerplatte befestigt ist.

Wenn hierbei die vorgegebene Anzahl von Umdrehungen zum Lösen der Trägerplatte vom Träger größer ist als die vorgegebene Anzahl von Umdrehungen zum Lockern des Sicherungselements, kann das Sicherungselement durch ein Lockern der Befestigungsschraube aus der Sicherungsstellung verbracht werden, ohne dass ein vollständiges Lösen der Trägerplatte und somit der Klammervorrichtung vom Träger notwendig ist.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht einer Klammervorrichtung zum Halten eines Behälters;
- Figur 2: schematisch eine Schnittansicht durch die Klammervorrichtung aus Figur 1;
- Figur 3: schematisch eine Detailansicht aus Figur 2;
- Figur 4: schematisch eine weitere Detailansicht der Klammervorrichtung gemäß den Figuren 1-3;
- Figur 5: schematisch eine weitere Detailansicht der Klammervorrichtung gemäß den Figuren 1-4; und
- Figur 6: schematisch eine Unteransicht der Klammervorrichtung aus Figur 1.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

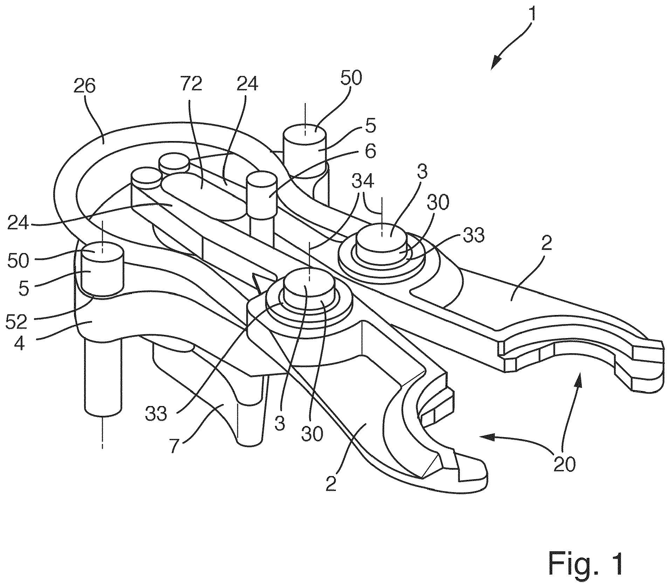

Figur 1 zeigt schematisch eine perspektivische Seitenansicht einer Klammervorrichtung 1 zum Halten eines Behälters. Die Klammervorrichtung 1 umfasst einen ersten und einen zweiten Klammerarm 2, welche jeweils um eine entsprechende erste und eine zweite Schwenkachse 3 schwenkbar an einer Trägerplatte 4 angeordnet sind. Die Klammerarme 2 weisen jeweils einen Halteabschnitt 20 zur Anlage an den zu haltenden Behälter auf.

Die Klammerarme 2 weisen ferner jeweils einen Steuerabschnitt 24 zur Interaktion mit einem Steuernocken 7 zum aktiven Bewegen des jeweiligen Halteabschnitts 20 auf, wobei die Steuerabschnitte 24 jeweils mit einem zwischen diesen angeordneten Interaktionsabschnitt 72 des Steuernockens 7 interagieren. Mithin ist die Klammervorrichtung 1 eine aktive Klammervorrichtung.

Die Klammervorrichtung 1 umfasst ein Vorspannelement 26, welches die Halteabschnitte 20 in eine geöffnete Position vorspannt. Vorliegend ist das Vorspannelement 26 einstückig mit den Klammerarmen 2 ausgebildet. Alternativ kann das Vorspannelement 26 auch als separates Teil bereitgestellt sein.

Wie unten noch weiter im Detail beschrieben, weisen die erste und die zweite Schwenkachse 3 jeweils einen Zylinderstiftabschnitt 30 zum Ausbilden eines Formschlusses radial zur Längsrichtung 34 der Schwenkachsen 3 mit einer hier nicht gezeigten Bohrung eines hier nicht gezeigten Trägers einer Behälterbehandlungsvorrichtung auf.

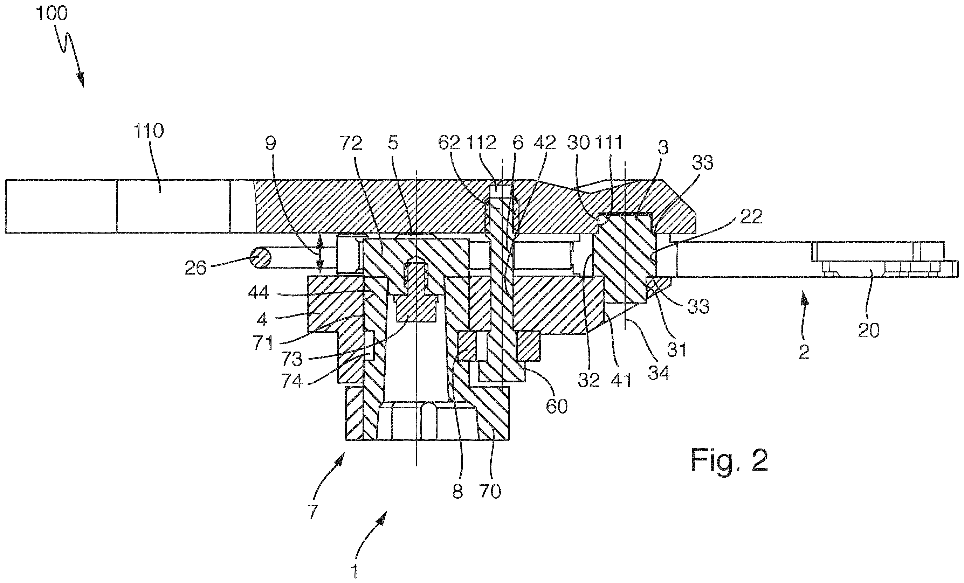

An die zylindrischen Zylinderstiftabschnitte 30 schließt sich in Längsrichtung 34 bei den Schwenkachsen 3 jeweils ein Längsanschlag 33 an, mittels welchem die Schwenkachsen 3 an den Träger der Behälterbehandlungsvorrichtung anschlagen, wie unten in Hinblick auf Figur 2 näher erläutert.

Die Klammervorrichtung 1 weist ferner optionale Stützbolzen 5 auf, welche in entsprechende Bohrungen der Trägerplatte 4 eingepresst sind. Die Stützbolzen 5 sind beabstandet von den Schwenkachsen 3 an der Trägerplatte 4 angeordnet, wobei die Stützbolzen 5 einen Stirnseitenabschnitt 50 zum Abstützen in Längsrichtung 34 gegen den Träger der Behälterbehandlungsvorrichtung sowie einen Anschlag zum Abstützen in Längsrichtung 34 gegen die Trägerplatte 4 aufweist.

In Figur 2 ist schematisch eine Schnittansicht durch die Klammervorrichtung 1 aus Figur 1 gezeigt. Mittels des Bezugszeichens 110 ist ein um eine hier nicht gezeigte Drehachse drehbarer Träger einer Behälterbehandlungsvorrichtung 100 angedeutet.

Deutlich zu erkennen ist hier, dass die Schwenkachse 3 mit ihrem Zylinderstiftabschnitt 30 in eine entsprechend ausgebildete Bohrung 111 des Trägers 110 eingeführt und so der Formschluss quer zur Längsrichtung 34 ausgebildet ist. Die Schwenkachse 3 ist bis zu ihrem Längsanschlag 33 in die Bohrung 111 eingeführt. In Längsrichtung 34 gesehen weist die Schwenkachse 3 beginnend vom an den Träger 110 anschlagenden Längsanschlag 33 einen Mittelabschnitt 32 auf, um welche die Klammerarme 2 jeweils mit einer Nabenbohrung 22 schwenkbar gelagert sind. Der Mittelabschnitt 32 erstreckt sich bis zu einem weiteren Längsabsatz 33 zum Anschlagen an die Trägerplatte 4. Daran anschließend weist die Schwenkachse 3 einen Passungsabschnitt 31 auf, welcher in eine Passbohrung 41 der Trägerplatte 4 eingeführt ist.

Dadurch, dass, wie aus Figur 2 zu erkennen, der Durchmesser des Mittelabschnitts 32 größer ist als jener des Zylinderstiftabschnitts 30 und jener des Passungsabschnitts 31, liegen beidseitig des Mittelabschnitts 32 die zuvor beschriebenen Längsabsätze 33 vor.

Vorliegend bilden der Passungsabschnitt 31 und die Passbohrung 41 eine Presspassung aus, sodass die Schwenkachsen 3 an der Trägerplatte 4 befestigt sind.

Der Zylinderstiftabschnitt 30 und die Bohrung 111 bilden eine Übergangspassung beziehungsweise eine leichte Übermaßpassung aus, derart, dass die Klammervorrichtung 1 an dem Träger 110 gehalten ist, jedoch ohne großen Kraftaufwand wieder von dem Träger 110 entfernt werden kann.

Um die Klammervorrichtung 1 an dem Träger 110 zu fixieren, ist die Befestigungsschraube 6 mittels eines Gewindeabschnitts 62 in eine entsprechend in dem Träger 110 vorgesehenen Gewindebohrung 112 eingeschraubt. Gegenüber dem Träger 110 stützt sich die durch ein Durchgangsloch 42 der Trägerplatte 4 verlaufende Befestigungsschraube 6 mittels eines Kopfabschnitts 60 an der Trägerplatte 4 ab, wobei ein später im Detail beschriebenes Sicherungselement 8 zwischen dem Kopfabschnitt 60 und der Trägerplatte 4 angeordnet ist. Die Stirnseite 50 und der Anschlag 52 der Stützbolzen 5, sowie die Längsanschläge 33 der Schwenkachsen 3 sind mit einem vorgegebenen Abstand 9 in Längsrichtung 34 gesehen voneinander beabstandet. Dadurch ist die Trägerplatte 4 im an den Träger 110 mittels der Befestigungsschraube 6 angeschraubten Zustand ebenfalls um den Abstand 9 von dem Träger 110 beabstandet gehalten.

Wie aus Figur 2 ferner zu entnehmen, ist die Befestigungsschraube 6 zwischen den Schwenkachsen 3 und den Stützbolzen 5 angeordnet. Mit anderen Worten sind in Bezug auf die Befestigungsschraube 6 die Schwenkachsen 3 auf einer Seite und die Stützbolzen 5 auf der anderen Seite angeordnet. Dadurch wird die durch die Befestigungsschraube 6 erzeugte Anzugskraft beidseitig der Befestigungsschraube 6 via der Trägerplatte 4 auf der einen Seite über die Stützbolzen 5 und auf der anderen Seite über die Schwenkachsen 3 auf den Träger 110 übertragen. Mit anderen Worten liegt ein geschlossener Kraftfluss beidseitig der Befestigungsschraube 6 und durch die Befestigungsschraube 6 vor.

Die Befestigungsschraube 6 ist derart ausgebildet, dass zum Anbringen der Klammervorrichtung 1 beziehungsweise zum Lösen der Klammervorrichtung 1 eine vorgegebene Anzahl von fünf Umdrehungen notwendig ist.

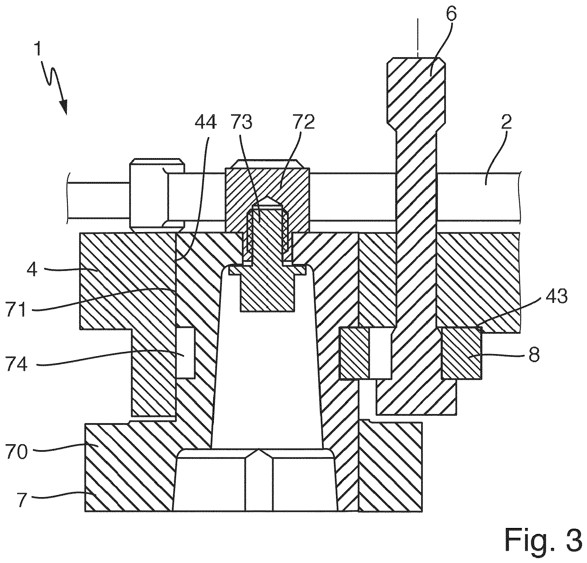

Figur 3 zeigt schematisch eine Detailansicht aus Figur 2, in welcher der Bereich des Steuernockens 7 und der Befestigungsschraube 6 detailliert wiedergegeben ist, wobei der Träger 110 ausgeblendet ist.

Der Steuernocken 7 weist einen Hauptkörper 70 auf an welchem der Interaktionsabschnitt 72 mittels einer Schraube 73 befestigt ist. Alternativ können der Hauptkörper 70 und der Interaktionsabschnitt 72 auch einstückig ausgebildet sein.

Der Steuernocken 7 weist einen Wellenabschnitt 71 auf, mittels welchem er in axialer Richtung bezogen auf die Längsrichtung 34 der Schwenkachsen 3 in einer Nockenbohrung 44 der Trägerplatte 4 geführt ist. Der Steuernocken 7 weist ferner eine Radialnut 74 auf.

Das Sicherungselement 8 greift in die Radialnut 74 ein, so dass der Steuernocken 7 in axialer Richtung gegenüber der Trägerplatte 4 fixiert ist. Um zu verhindern, dass das Sicherungselement 8 während des Betriebs quer zur Längsrichtung 34 verrutscht und so außer Eingriff mit der Radialnut 74 kommt, weist die Trägerplatte 4 einen Abs. 43 auf, durch welchen das Sicherungselement 8 in einer wie in Figur 3 gezeigten Sicherungsstellung fixiert ist.

Wird die Befestigungsschraube 6 aus der die Klammervorrichtung 1 an dem Träger 110 fixierenden Stellung um eine Umdrehung in lösender Richtung gedreht und die Schraubverbindung gelockert, so kann das Sicherungselement 8 aus der Sicherungsstellung bewegt werden, in dem das Sicherungselement 8 über den Anschlag 34 hinweg geschoben wird.

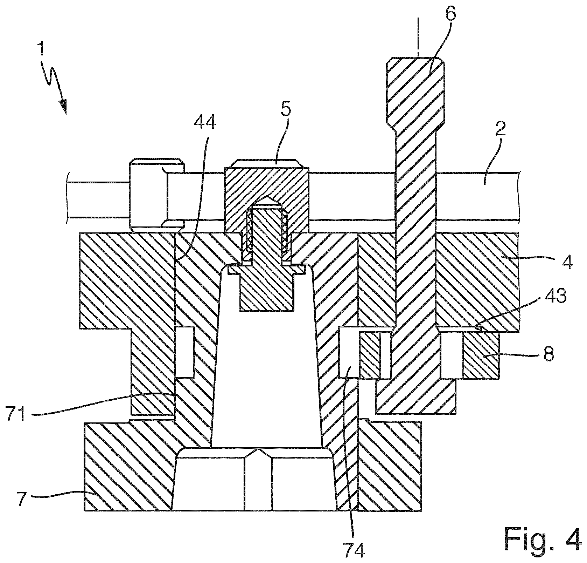

Die vorgeschriebene, gelockerte Stellung der Befestigungsschraube 6, in welcher das Sicherungselement 8 aus der Sicherungsstellung bewegt ist, ist Figur 4 zu entnehmen, welche schematisch eine weitere Detailansicht der Klammervorrichtung 1 gemäß den Figuren 1-3 zeigt.

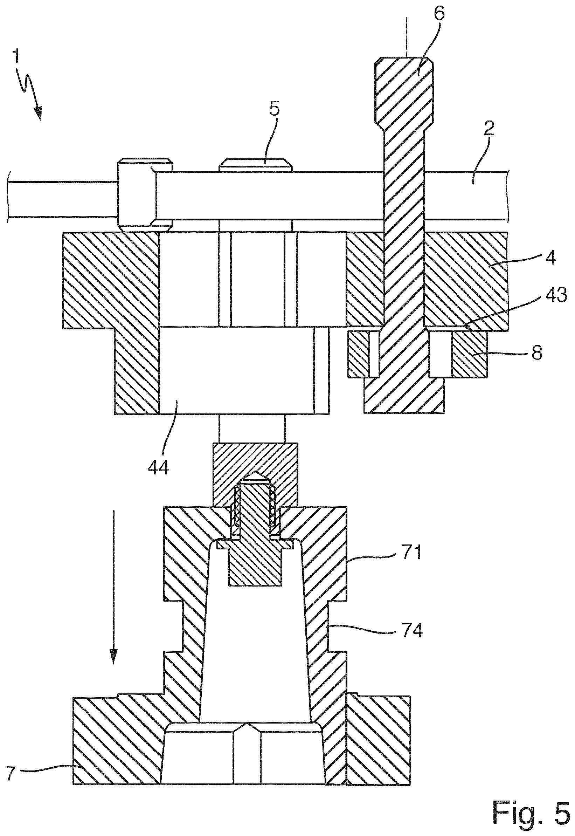

Aus Figur 5 ist schematisch eine weitere Detailansicht der Klammervorrichtung 1 gemäß den Figuren 1-4 zu entnehmen, in welcher der Steuernocken 7 in einem von der Trägerplatte 4 demontierten Zustand gezeigt ist.

Der Hauptkörper 70 und das Interaktionselement 72 können eine Metall/Kunststoff-Paarung oder eine Kunststoff/Metall-Paarung aufweisen. Alternativ können auch beide Teile 70, 72 Metall oder Kunststoff aufweisen, wobei die Teile 70, 72 dann bevorzugt einstückig ausgebildet sind. Ferner kann der Steuernocken z zumindest teilweise, bevorzugt im Bereich des Interaktionsabschnitts 72, des Wellenabschnitts 70 und/oder einem Eingriffsbereich mit einem Schalter oder einer Führung der Behälterbehandlungsvorrichtung 100, eine Beschichtung, insbesondere eine reibungskoeffizientvermindernde Beschichtung, bevorzugt aus einem Kunststoff, aufweisen.

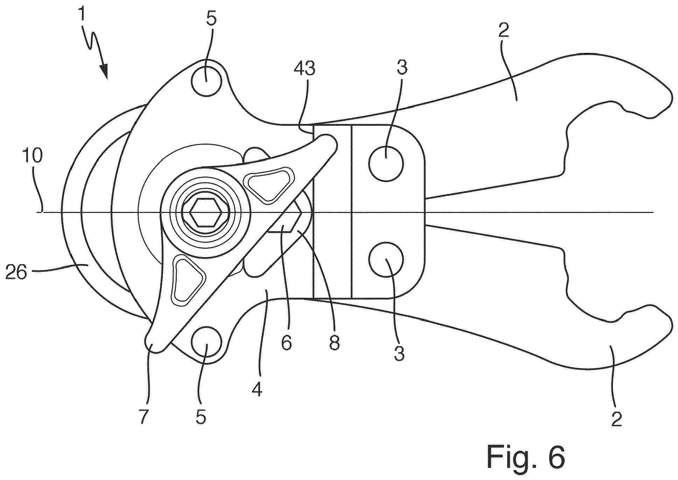

Figur 6 zeigt schematisch eine Unteransicht der Klammervorrichtung 1 aus Figur 1, aus welcher insbesondere Ausgestaltung des Anschlags 43 entnommen werden kann.

Ferner offenbart Figur 6, dass die Klammervorrichtung 1 in Bezug auf eine Längsachse 10 spiegelsymmetrisch ausgebildet ist. Hierbei liegen die Befestigungsschraube 6 und die Mittelachse des Steuernocken 7, um welche der Steuernocken 7 schwenkbar an der Trägerplatte 4 gehalten ist, auf der Symmetrieachse 10. Die Schwenkachsen 3 und die Stützbolzen 5 sind jeweils beidseitig der Längsachse 10 angeordnet und weisen von der Längsachse 10 jeweils den gleichen Abstand auf, wie ihr jeweiliges gegenüberliegendes Pendant. Aus dem Vorbeschriebenen ergibt sich eine symmetrische Beanspruchung der Klammervorrichtung 1.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen, welcher durch die folgenden Ansprüche definiert wird.

### Bezugszeichenliste

- 1: Klammervorrichtung
- 2: Klammerarm
- 20: Halteabschnitt
- 22: Nabenbohrung
- 24: Steuerabschnitt
- 26: Vorspannelement
- 3: Schwenkachse
- 30: Zylinderstiftabschnitt
- 31: Passungsabschnitt
- 32: Mittelabschnitt
- 33: Längsabsatz
- 34: Längsrichtung
- 4: Trägerplatte
- 41: Passbohrung
- 42: Durchgangsloch
- 43: Absatz
- 44: Nockenbohrung
- 5: Stützbolzen
- 50: Stirnseitenabschnitt
- 6: Befestigungsschraube
- 60: Kopfabschnitt
- 62: Gewindeabschnitt
- 7: Steuernocken
- 70: Hauptkörper
- 71: Wellenabschnitt
- 72: Interaktionsabschnitt
- 73: Schraube
- 74: Radialnut
- 8: Sicherungselement
- 9: Abstand
- 10: Längsachse
- 100: Behälterbehandlungsvorrichtung
- 110: Träger
- 111: Bohrung
- 112: Gewindebohrung

## Patentansprüche

1. Behälterbehandlungsvorrichtung (100) mit einem eine Bohrung (111) aufweisenden Träger (110) und einer Klammervorrichtung (1) zum Halten eines Behälters in einer Behälterbehandlungsvorrichtung (100), bevorzugt zum Halten eines Getränkebehälters an einem Halsabschnitt, wobei die Klammervorrichtung (1) aufweist:
einen um eine erste Schwenkachse (3) an einer Trägerplatte (4) schwenkbar angeordneten ersten Klammerarm (2) mit einem Halteabschnitt (20) zur Anlage an den zu haltenden Behälter und einen um eine zweite Schwenkachse (3) an der Trägerplatte (4) schwenkbar angeordneten zweiten Klammerarm (2) mit einem Halteabschnitt (20) zur Anlage an den zu haltenden Behälter, wobei
die erste Schwenkachse (3) und die zweite Schwenkachse (3) jeweils einen Zylinderstiftabschnitt (30) zum Ausbilden eines Formschlusses radial zur Längsrichtung (34) der Schwenkachse (3) mit der Bohrung (111) im Träger (110) der Behälterbehandlungsvorrichtung (100) aufweisen, wobei
die Klammervorrichtung (1) zumindest einen Stützbolzen (5) aufweist, der beabstandet von den Schwenkachsen (3) an der Trägerplatte (4) angeordnet ist, wobei der Stützbolzen (5) einen Stirnseitenabschnitt (50) zum Abstützen in Längsrichtung (34) der Schwenkachsen (3) gegen den Träger (110) der Behälterbehandlungsvorrichtung (100) und einen Anschlag (52) zum Abstützen in Längsrichtung (43) der Schwenkachsen (3) gegen die Trägerplatte (4) aufweist
**dadurch gekennzeichnet, dass**
eine Befestigungsschraube (6) zum Befestigen der Klammervorrichtung (1) an dem Träger (110) der Behälterbehandlungsvorrichtung (100) zwischen den Schwenkachsen (3) und dem zumindest einen Stützbolzen (5) vorgesehen ist.

2. Behälterbehandlungsvorrichtung (100) gemäß Anspruch 1, **dadurch gekennzeichnet, dass** die Zylinderstiftabschnitte (30) jeweils auf einer der Trägerplatte (4) gegenüberliegenden Seite der jeweiligen Schwenkachse (3) angeordnet sind.

3. Behälterbehandlungsvorrichtung (100) gemäß Anspruch 1 oder 2, **dadurch gekennzeichnet, dass** die Schwenkachsen (3) einen Passungsabschnitt (31) zum Ausbilden eines Formschlusses radial zur Längsrichtung (34) der Schwenkachse (3) mit einer Passbohrung (41) in der Trägerplatte (4) aufweisen, wobei bevorzugt der Passungsabschnitt (31) und die Passbohrung (41) eine Presspassung ausbilden.

4. Behälterbehandlungsvorrichtung (100) gemäß einem der vorstehenden Ansprüche, **dadurch gekennzeichnet, dass** ein Mittelabschnitt (32) der Schwenkachsen (3), um welche der jeweilige Klammerarm (2) mittels einer Nabenbohrung (22) schwenkbar ist, einen größeren Durchmesser aufweist als der Zylinderstiftabschnitt (30) und der Passungsabschnitt (31) der jeweiligen Schwenkachse (3), wobei bevorzugt die Schwenkachsen (3) jeweils auf einer Seite des Mittelabschnitts (32) einen Längsabsatz (33) zum Anschlagen an den Träger (110) und auf der anderen Seite des Mittelabschnitts (32) einen weiteren Längsabsatz (33) zum Anschlagen an die Trägerplatte (4) aufweisen.

5. Behälterbehandlungsvorrichtung (100) gemäß einem der vorstehenden Ansprüche, **dadurch gekennzeichnet, dass** die Befestigungsschraube (6) auf einer Seite einen Kopfabschnitt (60) aufweist, mittels welchem die Befestigungsschraube (6) sich an einer den Klammerarmen (2) gegenüberliegenden Seite der Trägerplatte (4) abstützt, und auf ihrer anderen Seite einen Gewindeabschnitt (62) zum Eingreifen in eine Gewindebohrung (112) des Trägers (110) aufweist, wobei die Befestigungsschraube (6) bevorzugt derart ausgebildet ist, dass eine vorgegebene Anzahl von Umdrehungen notwendig ist, um die Klammervorrichtung (1) an dem Träger (110) zu befestigen, bevorzugt zwei bis zehn Umdrehungen, besonders bevorzugt drei bis acht Umdrehungen und ganz besonders bevorzugt fünf Umdrehungen, wobei bevorzugt genau eine Befestigungsschraube (6) vorgesehen ist.

6. Behälterbehandlungsvorrichtung (100) gemäß einem der vorstehenden Ansprüche, **dadurch gekennzeichnet, dass** die Klammerarme (2) jeweils einen Steuerabschnitt (24) zur Interaktion mit einem Steuernocken (7) zum aktiven Bewegen des jeweiligen Halteabschnitts (20) aufweisen.

7. Behälterbehandlungsvorrichtung (100) gemäß dem vorstehenden Anspruch, **dadurch gekennzeichnet, dass** der Steuernocken (7) einen Wellenabschnitt (71) aufweist, mittels welchem er in axialer Richtung bezogen auf die Längsrichtung (34) der Schwenkachsen (3) in einer Nockenbohrung (44) der Trägerplatte (4) geführt ist, und der Steuernocken (7) eine Radialnut (74) aufweist, wobei ein an der Trägerplatte (4) angeordnetes Sicherungselement (8) ausgebildet ist, um zum Arretieren des Steuernocken (7) in axialer Richtung gegenüber der Trägerplatte (4) in die Radialnut (74) formschlüssig einzugreifen.

8. Behälterbehandlungsvorrichtung (100) gemäß dem vorstehenden Anspruch, **dadurch gekennzeichnet, dass** das Sicherungselement (8) mittels einer Schraube an der Trägerplatte (4) befestigt ist, derart, so dass durch ein Lockern der Schraubverbindung ein Verschieben des Sicherungselements (8) quer zur axialen Richtung ermöglicht ist, wobei bevorzugt die Trägerplatte (4) einen Absatz (43) aufweist, durch welchen das Sicherungselement (8) in einer Sicherungsstellung, in welcher das Sicherungselement (8) mit der Radialnut (74) in Eingriff ist, radial zur axialen Richtung positioniert ist, wobei bevorzugt eine vorgegebene Anzahl von Umdrehungen der Schraube notwendig ist, um das Sicherungselement (8) aus der Sicherungsstellung bewegen zu können, bevorzugt eine halbe Umdrehung bis drei Umdrehungen, besonders bevorzugt eine Umdrehung.

9. Behälterbehandlungsvorrichtung (100) gemäß Anspruch 7 oder 8, **dadurch gekennzeichnet, dass** das Sicherungselement (8) mittels der Befestigungsschraube (6) an der Trägerplatte (4) befestigt ist, wobei bevorzugt die vorgegebene Anzahl von Umdrehungen zum Lösen der Trägerplatte (4) vom Träger (110) größer ist als die vorgegebene Anzahl von Umdrehungen zum Lockern des Sicherungselements (8).

## Claims

1. Container handling device (100) comprising a support (110) having a bore (111), and a clamping device (1) for holding a container in a container handling device (100), preferably for holding a beverage container by a neck portion, wherein the clamping device (1) comprises:
a first clamping arm (2), arranged on a support plate (4) pivotably about a first pivot shaft (3) and having a holding portion (20) for contact against the container to be held, and a second clamping arm (2), arranged on the support plate (4) pivotably about a second pivot shaft (3) and having a holding portion (20) for contact against the container to be held, wherein
the first pivot shaft (3) and the second pivot shaft (3) respectively have a cylinder pin portion (30) for forming a form closure, radially to the longitudinal direction (34) of the pivot shaft (3), with the bore (111) in the support (110) of the container handling device (100), wherein
the clamping device (1) comprises at least one supporting bolt (5) which is arranged on the support plate (4) at a distance from the pivot shafts (3), wherein the supporting bolt (5) has an end face portion (50) for supporting the pivot shafts (3), in the longitudinal direction (34), against the support (110) of the container handling device (100), and a stop (52) for supporting the pivot shafts (3), in the longitudinal direction (43), against the support plate (4)
**characterized in that**
a fastening screw (6) for fastening the clamping device (1) to the support (110) of the container handling device (100) is provided between the pivot shafts (3) and the at least one supporting bolt (5).

2. Container handling device (100) according to claim 1, **characterized in that** the cylinder pin portions (30) are respectively arranged on a side of the respective pivot shaft (3) that lies opposite the support plate (4).

3. Container handling device (100) according to claim 1 or 2,
**characterized in that** the pivot shafts (3) have a fit portion (31) for forming a form closure, radially to the longitudinal direction (34) of the pivot shaft (3), with a locating hole (41) in the support plate (4), wherein the fit portion (31) and the locating hole (41) preferably form a press fit.

4. Container handling device (100) according to one of the preceding claims, **characterized in that** a middle portion (32) of the pivot shafts (3) about which the respective clamping arm (2) is pivotable by means of a hub bore (22) has a greater diameter than the cylinder pin portion (30) and the fit portion (31) of the respective pivot shaft (3), wherein preferably the pivot shafts (3) respectively have, on one side of the middle portion (32), a longitudinal step (33) for butting against the support (110), and, on the other side of the middle portion (32), a further longitudinal step (33) for butting against the support plate (4).

5. Container handling device (100) according to one of the preceding claims, **characterized in that** the fastening screw (6) has, on one side, a head portion (60) by means of which the fastening screw (6) is supported against a side of the support plate (4) that lies opposite the clamping arms (2), and, on its other side, a threaded portion (62) for engaging in a threaded bore (112) of the support (110), wherein the fastening screw (6) is preferably configured such that a predefined number of revolutions is necessary in order to fasten the clamping device (1) to the support (110), preferably two to ten revolutions, particularly preferably three to eight revolutions, and quite especially preferably five revolutions, wherein preferably precisely one fastening screw (6) is provided.

6. Container handling device (100) according to one of the preceding claims, **characterized in that** the clamping arms (2) respectively have a control portion (24) for interacting with a control cam (7) for actively moving the respective holding portion (20).

7. Container handling device (100) according to the preceding claim, **characterized in that** the control cam (7) has a shaft portion (71), by means of which it is guided in the axial direction, in relation to the longitudinal direction (34) of the pivot shafts (3), in a cam bore (44) of the support plate (4), and the control cam (7) has a radial groove (74), wherein a locking element (8) arranged on the support plate (4) is configured, for the detention of the control cam (7) in the axial direction in relation to the support plate (4), to engage positively in the radial groove (74).

8. Container handling device (100) according to the preceding claim, **characterized in that** the locking element (8) is fastened by means of a screw to the support plate (4) such that, by a loosening of the screwed connection, a displacement of the locking element (8) transversely to the axial direction is enabled, wherein preferably the support plate (4) has a step (43) by which the locking element (8), in a locking position in which the locking element (8) is in engagement with the radial groove (74), is positioned radially to the axial direction, wherein preferably a predefined number of revolutions of the screw is necessary in order to be able to move the locking element (8) out of the locking position, preferably half a revolution to three revolutions, particularly preferably one revolution.

9. Container handling device (100) according to claim 7 or 8, **characterized in that** the locking element (8) is fastened to the support plate (4) by means of the fastening screw (6), wherein preferably the predefined number of revolutions for releasing the support plate (4) from the support (110) is greater than the predefined number of revolutions for loosening the locking element (8).

## Revendications

1. Dispositif de traitement de récipient (100) comportant un support (110) présentant un alésage (111) et un dispositif de serrage (1) permettant le maintien d'un récipient dans un dispositif de traitement de récipient (100), de préférence permettant le maintien d'un récipient pour boisson sur une section formant col, dans lequel le dispositif de serrage (1) présente :
un premier bras de serrage (2) disposé de manière à pouvoir pivoter autour d'un premier axe de pivotement (3) sur une plaque de support (4) et comportant une section de maintien (20) pour l'installation sur le récipient à maintenir, et un second bras de serrage (2) disposé de manière à pouvoir pivoter autour d'un second axe de pivotement (3) sur la plaque de support (4) et comportant une section de maintien (20) pour l'installation sur le récipient à maintenir, dans lequel
le premier axe de pivotement (3) et le second axe de pivotement (3) présentent respectivement une section formant goupille cylindrique (30) pour la formation d'une liaison par complémentarité de forme, de manière radiale par rapport à la direction longitudinale (34) de l'axe de pivotement (3), avec l'alésage (111) dans le support (110) du dispositif de traitement de récipient (100), dans lequel
le dispositif de serrage (1) présente au moins un boulon d'appui (5) qui est disposé à distance des axes de pivotement (3) sur la plaque de support (4), dans lequel le boulon d'appui (5) présente une section formant face frontale (50) pour l'appui, dans la direction longitudinale (34) des axes de pivotement (3), contre le support (110) du dispositif de traitement de récipient (100) et une butée (52) pour l'appui, dans la direction longitudinale (43) des axes de pivotement (3), contre la plaque de support (4)
**caractérisé en ce que**
une vis de fixation (6) pour la fixation du dispositif de serrage (1) sur le support (110) du dispositif de traitement de récipient (100) est prévue entre les axes de pivotement (3) et l'au moins un boulon d'appui (5).

2. Dispositif de traitement de récipient (100) selon la revendication 1, **caractérisé en ce que** les sections formant goupilles cylindriques (30) sont disposées respectivement sur une face de l'axe de pivotement (3) respectif opposée à la plaque de support (4).

3. Dispositif de traitement de récipient (100) selon la revendication 1 ou 2, **caractérisé en ce que** les axes de pivotement (3) présentent une section d'ajustement (31) pour la formation d'une liaison par complémentarité de forme, de manière radiale par rapport à la direction longitudinale (34) de l'axe de pivotement (3), avec un alésage d'ajustement (41) dans la plaque de support (4), dans lequel, de préférence, la section d'ajustement (31) et l'alésage d'ajustement (41) forment un ajustement serré.

4. Dispositif de traitement de récipient (100) selon l'une des revendications précédentes, **caractérisé en ce qu'**une section centrale (32) des axes de pivotement (3), autour desquels le bras de serrage (2) respectif peut pivoter au moyen d'un alésage de moyeu (22), présente un diamètre supérieur à celui de la section formant goupille cylindrique (30) et de la section d'ajustement (31) de l'axe de pivotement (3) respectif, dans lequel, de préférence, les axes de pivotement (3) présentent, respectivement sur une face de la section centrale (32), un épaulement longitudinal (33) pour la butée contre le support (110) et, sur l'autre face de la section centrale (32), un épaulement longitudinal (33) supplémentaire pour la butée contre la plaque de support (4).

5. Dispositif de traitement de récipient (100) selon l'une des revendications précédentes, **caractérisé en ce que** la vis de fixation (6) présente, sur une face, une section formant tête (60) au moyen de laquelle la vis de fixation (6) s'appuie sur une face de la plaque de support (4) opposée aux bras de serrage (2), et présente, sur son autre face, une section filetée (62) pour la mise en prise dans un alésage fileté (112) du support (110), dans lequel la vis de fixation (6) est de préférence réalisée de telle sorte qu'un nombre prédéterminé de tours est nécessaire afin de fixer le dispositif de serrage (1) sur le support (110), de préférence deux à dix tours, de manière particulièrement préférée trois à huit tours et de manière très particulièrement préférée cinq tours, dans lequel, de préférence, exactement une vis de fixation (6) est prévue.

6. Dispositif de traitement de récipient (100) selon l'une des revendications précédentes, **caractérisé en ce que** les bras de serrage (2) présentent respectivement une section de commande (24) pour l'interaction avec une came de commande (7) pour le déplacement actif de la section de maintien (20) respective.

7. Dispositif de traitement de récipient (100) selon la revendication précédente, **caractérisé en ce que** la came de commande (7) présente une section formant arbre (71), au moyen de laquelle la came de commande est guidée, dans la direction axiale par rapport à la direction longitudinale (34) des axes de pivotement (3), dans un alésage pour came (44) de la plaque de support (4), et la came de commande (7) présente une rainure radiale (74), dans lequel un élément de verrouillage (8) disposé sur la plaque de support (4) est réalisé pour venir en prise par complémentarité de forme dans la rainure radiale (74) pour le blocage de la came de commande (7) dans la direction axiale par rapport à la plaque de support (4).

8. Dispositif de traitement de récipient (100) selon la revendication précédente, **caractérisé en ce que** l'élément de verrouillage (8) est fixé à la plaque de support (4) au moyen d'une vis, de telle sorte qu'un desserrage de la liaison par vissage permet un coulissement de l'élément de verrouillage (8) transversalement par rapport à la direction axiale, dans lequel, de préférence, la plaque de support (4) présente un épaulement (43) au moyen duquel l'élément de verrouillage (8) est positionné radialement par rapport à la direction axiale dans une position de verrouillage dans laquelle l'élément de verrouillage (8) vient en prise avec la rainure radiale (74), dans lequel, de préférence, un nombre prédéterminé de tours de la vis est nécessaire afin de pouvoir déplacer l'élément de verrouillage (8) hors de la position de verrouillage, de préférence un demi-tour à trois tours, de manière particulièrement préférée un tour.

9. Dispositif de traitement de récipient (100) selon la revendication 7 ou 8, **caractérisé en ce que** l'élément de verrouillage (8) est fixé à la plaque de support (4) au moyen de la vis de fixation (6), dans lequel, de préférence, le nombre prédéterminé de tours pour la séparation de la plaque de support (4) du support (110) est supérieur au nombre prédéterminé de tours pour le desserrage de l'élément de verrouillage (8).
